# EUROPEAN PATENT SPECIFICATION

(11) **EP 0 698 475 B1**
(45) Date of publication and mention of the grant of the patent: **12.07.2000**
(21) Application number: 95303195.2
(22) Date of filing: 12.05.1995
(51) Int. Cl.: B29C 67/24, B29C 70/48

(54) **Resin moulding method and apparatus**
Verfahren und Vorrichtung zum Formen von Kunstharz
Procédé et dispositif pour le moulage de résine

(30) Priority: 23.07.1994 GB 9415277
(43) Date of publication of application: 28.02.1996
(73) Proprietor: FORD MOTOR COMPANY LIMITED, Brentwood Essex (GB); Ford-Werke Aktiengesellschaft, 50735 Köln (DE); FORD FRANCE S. A., 92506 Rueil-Malmaison Cédex (FR)
(72) Inventor: Blanchard, Patrick James, Lenton, Nottingham NG7 1JR (GB); Rudd, Christopher Douglas, West Bridgford, Nottingham NG2 5DX (GB)
(74) Representative: Messulam, Alec Moses

(56) References cited:
- EP-A- 0 309 933
- EP-A- 0 529 651
- EP-A- 0 594 981
- DE-A- 2 817 687
- DE-A- 3 324 204
- DE-A- 3 521 948
- DE-A- 3 640 474
- GB-A- 2 198 386
- US-A- 4 404 261
- US-A- 5 034 173
- PATENT ABSTRACTS OF JAPAN vol. 012, no. 292 (M-729), 10 August 1988 & JP-A-63 069614 (MAZDA MOTOR CORP), 29 March 1988,

## Description

This invention relates to the moulding of products from thermosetting resins, and in particular to resin transfer moulding. In this process, a fibrous reinforcement preform is placed in a mould, the mould is closed and resin is introduced into the mould cavity to wet the preform and to fill the mould. When the resin has set, a finished component can be taken from the mould and passed to any necessary clean up processes.

The choice of the resin system (resin plus catalyst) is carefully chosen to ensure that the resin does flow completely to the edges of the mould cavity before it sets, but so that setting takes place as soon as possible after the mould is completely filled.

In order for resin transfer moulding to be useful for the production of components in volume, it is necessary to reduce the cycle time, ie the time between successive openings of the mould, as far as possible.

It is known from US-PS 4 404 261 to assist uniform cure of a product moulded from a plurality of solid plies of polymeric material by using different catalysts in different plies, such that less heat is required to initiate the curing of the plies at the centre of the product than is required at the edges. This is intended to promote uniform curing throughout the product, when heat is applied to the product only at the edges.

It is also known from EP-A-0 529 651 to maintain resin and catalyst in separate reservoirs, and to mix the two in a mixing head, from where the now-catalysed resin is fed to a mould. More than one resin/catalyst mixture can be mixed in the same mixing head.

According to the present invention, there is provided a resin transfer moulding method for moulding products from thermosetting resins, whereby a continuous flow of resin into a mould cavity begins with a resin mixed with a first catalyst and changes before the mould is full to the same resin mixed with a second catalyst, with the first catalyst being chosen to set the resin at a higher temperature than the second catalyst.

In a method using resin systems which set at different temperatures, and in which cold resin is introduced into a heated mould, the first resin introduced will be heated by the stored heat of the mould, and the incoming cold resin will tend to reduce the temperature of the mould at the injection point. By using a cold setting resin to form the part of the component around the injection point, the setting of the resin and therefore the process cycle can be considerably speeded up compared to the case where a hot setting resin is introduced to the mould at the end of the process, in the area of the, now cold, resin injection point.

The change in resin system could be continuous throughout the injection phase, to produce a profiling effect, rather than discrete resin systems.

The invention also provides apparatus for moulding products from thermosetting resins, the apparatus comprising a reservoir for uncatalysed resin, a main conduit extending from the reservoir for connection to a mould, means for forcing resin to flow through the main conduit into the mould, at least two independent catalyst reservoirs, characterised in a stirrer for mixing the catalysts and the resin, in that the at least two catalyst reservoirs are for containing different catalysts and are associated with a single uncatalysed resin reservoir and in that means are provided for connecting one or the other of the catalyst reservoirs to the main conduit.

A valve will be provided to switch over from one catalyst reservoir to the other, and it is important that there should be no introduction of air or other foreign matter when changeover takes place.

Initiation of changeover can be in response to the elapsing of a period of time after the commencement of resin introduction, or on the sensing of a particular parameter associated with resin introduction, for example the changeover may be initiated when a sensor in the mould detects that the resin front has reached a pre-determined position within the mould.

If a continuously changing resin system is being used, more sophisticated equipment would be required, for example to provide a continuously changing catalyst composition to be fed into a resin stream.

The invention will now be further described, by way of example, with reference to the accompanying drawings, in which:
Figure 1 is a graph showing the thermal history of a resin transfer moulding cycle, in accordance with the prior art;
Figure 2 is a graph corresponding to the graph of Figure 1 but showing the thermal history of a resin transfer moulding cycle in accordance with the invention;
Figure 3 is a schematic illustration of an equipment used to achieve a resin transfer moulding cycle; and
Figure 4 is a schematic illustration of the apparatus in accordance with the invention.

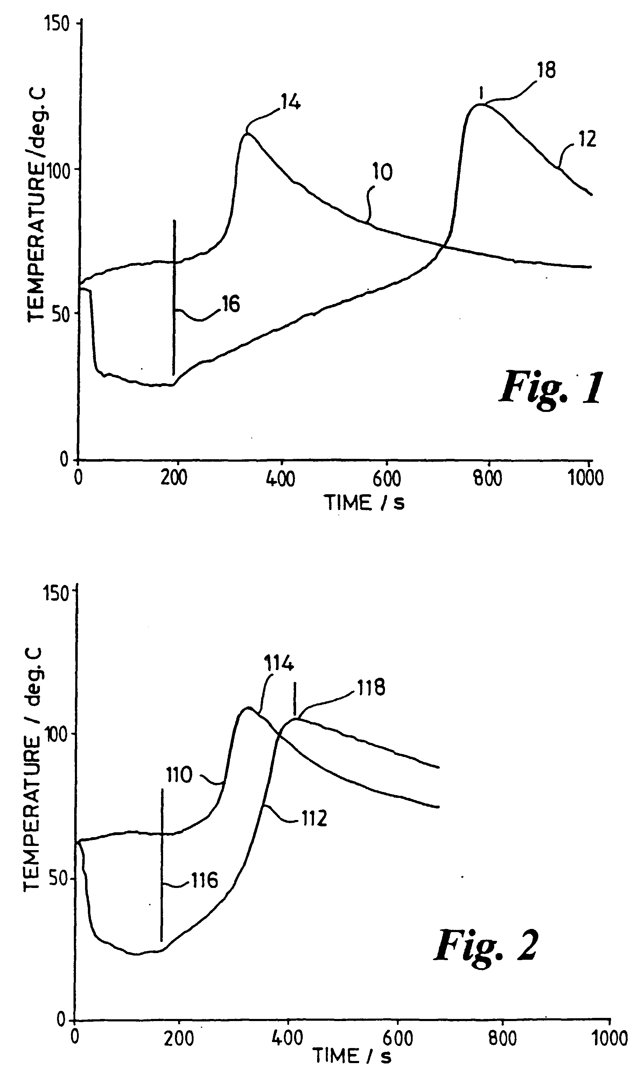

Figures 1 and 2 are graphs on which temperature is plotted against time. In Figure 1, the curve 10 represents the thermal history at the periphery of a resin transfer mould, and the curve 12 represents the thermal history at the resin injection gate of the same mould. In Figure 2, the same features are designated with the same reference numerals, prefixed by "1".

In resin transfer moulding, the resin is mixed with catalyst before or as it enters the mould cavity. The setting or curing process has therefore already begun (but with a negligible degree of conversion) as the resin begins to flow through the mould, but it is essential that the resin reaches the extremities of the mould cavity before it sets. Normally, the resin will be introduced cold into a heated mould, and the activity of the catalyst and the temperature of the mould will be determined so that the resin is able to flow to the edges of the mould but begins to set as soon as it reaches the mould edges. The actual setting process for the resin is exothermic, so the occurrence of setting can be monitored by watching the temperature using probes in the mould wall. The probes may be mounted flush to the internal surface of the mould cavity or may protrude into the surface of the moulded part.

Looking now at the example illustrated in Figure 1, the mould is initially heated to a temperature of about 60°C. As the cold resin is introduced at the injection gate of the mould, there is little initial change in the temperature at the mould periphery as shown by curve 10. However, the temperature rises sharply to a peak 14 when the resin begins to cure at the mould periphery. The resin is substantially cured and set at the mould periphery after about 350 seconds, and the temperature at the mould periphery thereafter gradually drops back to the original mould temperature.

However, at the injection gate, as shown by the curve 12, the temperature initially drops sharply when the cold resin is introduced. Once injection is completed, after about 200 seconds and as indicated by the line 16, the temperature of the resin at the injection gate begins to rise until it reaches a temperature of about 70°C at which curing can start. Thereafter the temperature at the injection gate rises to a peak 18 and it is only when this peak is reached that the resin is completely set throughout the mould. In the illustration shown, this results in a cure time for the last parts to cure of about 800 seconds from the start of injection.

Turning now to Figure 2, it will be seen that the curve 110 representing the thermal history at the mould periphery is effectively unchanged from the curve 10 in Figure 1, and also the temperature profiles during injection are substantially the same.

The difference however between the two situations is that in Figure 2, the resin introduced last, ie the resin which remains in the vicinity of the injection gate, is a resin which starts to cure at a relatively low temperature. It is therefore not necessary to wait until the stored heat in the mould heats up the resin before cure can begin; instead, cure begins in this case at a low temperature of about 30°C resulting in the completion of cure at the injection gate after about 400 seconds.

In this example, by using a cold curing catalyst at the end of the mould cycle and a hot curing catalyst at the beginning of the mould cycle, a cycle time reduction of about 50% has been possible.

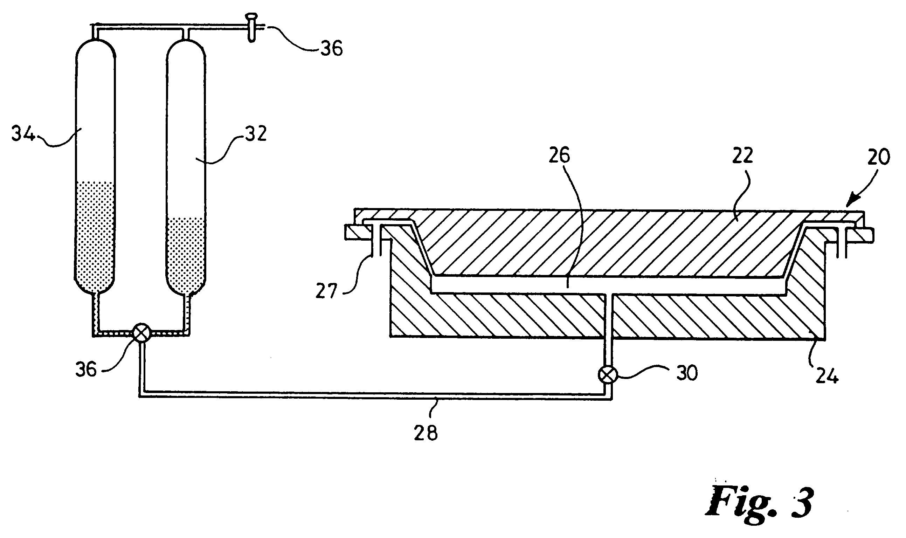

Figure 3 shows the equipment used to achieve this cycle time reduction.

A mould 20 has an upper half 22, a lower half 24, and a cavity 26. Resin is injected into the mould (in which a preform - not shown - has previously been located) through an injection conduit 28. A resin inlet valve 30 is provided in the conduit 28.

Two parallel reservoir 32 and 34 contain resin mixed with catalyst. In the reservoir 34 is located a hot curing resin system and in the reservoir 32 is located a cold curing resin system. A changeover valve 36 is operable to connect either the reservoir 34 or the reservoir 32 to the injection line 28.

That one of the reservoirs 32, 34 which is connected to the injection line 28 is pressurised by supply pressure 36 which exerts pressure on the resin in the reservoir to force the resin out of the reservoir, along the injection line 28, through the valve 30 and into the mould cavity 26.

The mould cavity 26 is vented at 27.

In use, the changeover valve 36 is initially set to connect the hot curing system reservoir 34 to the injection line 28. The inlet valve 30 is then opened and the hot curing resin is injected into the mould cavity. The resin begins to flow out of the mould cavity, from the centre towards the edges. Although a centre pin gate is described here, the method of the invention can be used with a variety of different gate arrangements.

At a pre-determined stage during the injection process, the changeover valve 36 is operated to disconnect the hot curing system reservoir 34 from the injection line 28 and to connect the cold curing system reservoir 32 to the injection line, so that the cold curing resin is forced into the injection line 28, following immediately behind the hot curing resin system. The changeover valve 36 will be constructed to ensure that no air or other extraneous matter is admitted when changeover takes place, and feed from the cold curing system will continue until the mould is completely full.

Because the cold curing resin will begin to cure as soon as it enters the mould (which will at this point be at a temperature of about 30°C), the resin close to the injection gate will set only a short time after the resin at the mould periphery.

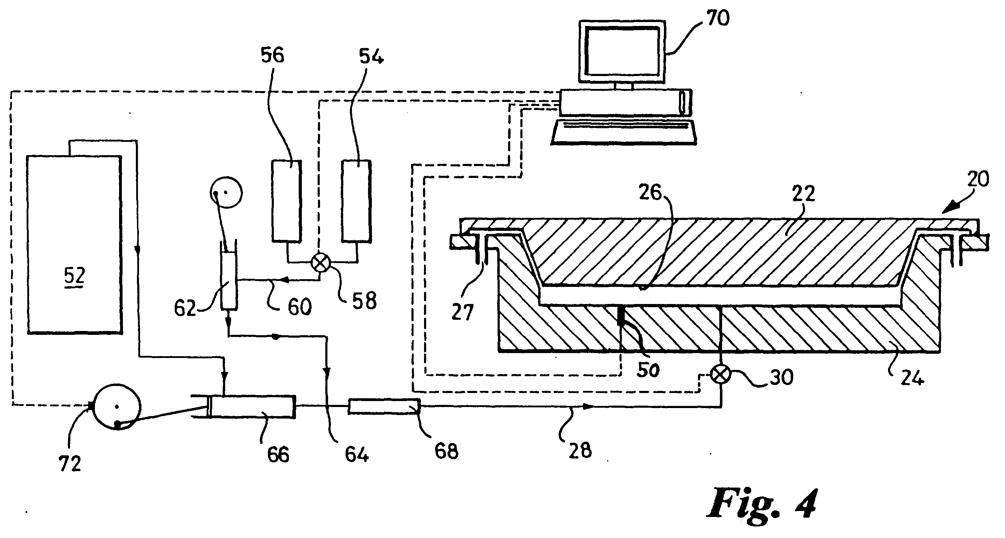

In the apparatus shown in Figure 4, there is only one resin reservoir and two separate catalyst reservoirs are provided, for admixture to the resin.

The mould 20 in Figure 4 is the same as the mould 20 in Figure 3. However, a different set of components is arranged externally of the mould. The mould also incorporates a resin arrival sensor 50.

In this apparatus there is a single resin reservoir 52, a hot curing catalyst reservoir 54 and a cold curing catalyst reservoir 56. A changeover valve 58 connects either one or the other of these two reservoirs via a line 60 to a pump 62 which then leads into the injection line 28 at 64.

A second pump 66 is used to pump resin from the reservoir 52 into the line 28, and the resin and the admixed catalyst then pass together through a static mixer 68 which ensures adequate mixing of the resin and catalyst before the resin system enters the mould cavity 26.

In this apparatus, operation is controlled by a computer 70 which receives inputs from the resin arrival sensor 50 and a pump counter 72 which monitors the resin pump 66. The computer 70 also controls operation of the changeover valve 58 and the inlet valve 30.

In use, with the pumps 62 and 66 operating and the changeover valve 58 set to allow flow of the high temperature catalyst from reservoir 54 into the line 60, a resin mixture with a hot curing catalyst is injected into the mould cavity 26.

When the resin arrival sensor detects the arrival of a resin front, indicating that the mould cavity 26 is partially filled, a signal is sent to the computer 70 which sends a signal to the changeover valve 58 to initiate a change from the reservoir 54 to the reservoir 56. Thereafter the pump 62 will be pumping the cold curing catalyst and a mixture of resin and cold curing catalyst will complete the filling of the mould.

Working in this way results in a thermal history of the type shown in Figure 2, where the completion of cure of the cold curing system at the injection gate is completed at point 118, only a relatively short time after completion of the cure at the mould periphery at 114.

The apparatus of Figure 4 is suited to a continuous production process because the resin and catalysts are only mixed together immediately before being introduced into the mould cavity. In the equipment of Figure 3 when the resin and catalyst are pre-mixed, pre-mixing is likely to take place in batches and each batch must be injected into a mould within a pre-determined time after mixing of the batch, because the resin will only have a limited time before it will set.

## Claims

1. A resin transfer moulding method for moulding products from thermosetting resins, whereby a continuous flow of resin into a mould cavity (26) begins with a resin mixed with a first catalyst and changes before the mould is full to the same resin mixed with a second catalyst, with the first catalyst being chosen to set the resin at a higher temperature than the second catalyst.

2. A method as claimed in any preceding claim, characterised in that there are more than two resin/catalyst mixture, with successive mixtures setting at a lower temperature than the preceding mixture.

3. A method as claimed in Claim 2, characterised in that the change in resin/catalyst mixtures is continuous throughout the stage whilst resin flows into the mould.

4. Apparatus for moulding products from thermosetting resins, the apparatus comprising a reservoir (52) for uncatalysed resin, a main conduit (28) extending from the reservoir for connection to a mould (20), means (66) for forcing resin to flow through the main conduit into the mould (20), at least two independent catalyst reservoirs (54,56), characterised in a stirrer (68) for mixing the catalysts and the resin, in that the at least two catalyst reservoirs are for containing different catalysts and are associated with a single uncatalysed resin reservoir and in that means (58) are provided for connecting one or the other of the catalyst reservoirs to the main conduit.

5. Apparatus as claimed in Claim 4, characterised in that the means (58) for connecting one of the catalyst reservoirs (54,56) to the main conduit whilst disconnecting the other of the catalyst reservoirs (56,54) from the main conduit(28), and vice versa, includes means (70) to initiate changeover between the two catalyst reservoirs (54,56) in response to the elapsing of a period of time after the commencement of resin introduction to a mould (20).

6. Apparatus as claimed in Claim 4, characterised in that the means (58) for connecting one of the catalyst reservoirs (54,56) to the main conduit whilst disconnecting the other of the catalyst reservoirs (56,54) from the main conduit (28), and vice versa, includes means (70) to initiate changeover between the two catalyst reservoirs in response to the sensing of a particular parameter associated with resin introduction.

7. Apparatus as claimed in Claim 6, characterised in that the changeover is initiated when a sensor (50) in the mould detects that the resin front has reached a pre-determined position within the mould.

## Patentansprüche

1. Eine Transferpressmethode für Harz zum Formen von Produkten aus wärmehärtbaren Harzen, in der ein stetiges Strömen von Harz in den Hohlraum (26) einer Form mit einem Harz beginnt, der mit einem ersten Katalysator vermischt ist und bevor die Form voll ist auf den gleichen mit einem zweiten Katalysator vermischten Harz überwechselt, wobei der erste Katalysator ausgewählt wird, um den Harz bei einer höheren Temperatur zu erhärten als der zweite Katalysator.

2. Eine Methode nach dem vorhergehenden Anspruch, dadurch gekennzeichnet dass hier mehr als zwei Harz/Katalysator-Gemische existieren, wobei aufeinanderfolgende Mischungen bei einer niedrigeren Temperatur erhärten, als die vorhergehende Mischung.

3. Eine Methode nach Anspruch 2, dadurch gekennzeichnet dass der Wechsel in den Harz/Katalysator-Gemischen stetig durch die Etappe ist, während Harz in die Form fliesst.

4. Ein Apparat zum Formen/Pressen von Produkten aus wärmehärtbaren Harzen, wobei der Apparat enthält: einen Behälter (52) für unkatalysierten Harz, eine Hauptleitung (28), die sich vom Behälter zur Verbindung mit einer Form (20) erstreckt, eine Vorrichtung (66), um den Harz zum Strömen durch die Hauptleitung in die Form (20) zu zwingen, mindestens zwei unabhängige Katalysatorbehälter (54, 56), dadurch gekennzeichnet dass ein Rührer (68) zum Mischen der Katalysatore und des Harzes, dass mindestens zwei Katalysatorbehälter verschiedene Katalysatore enthalten sollen und mit einem einzigen unkatalysierten Harzbehälter verbunden sind und dass eine Vorrichtung (58) zum Verbinden des einen oder anderen Katalysatorbehälters mit der Hauptleitung vorgesehen ist.

5. Ein Apparat nach Anspruch 4, dadurch gekennzeichnet dass die Vorrichtung (58) einen der Katalysatorbehälter (54, 56) mit der Hauptleitung verbindet, während sie die Verbindung des anderen der beiden Katalysatorbehälter (56, 54) von der Hauptleitung (28) unterbricht und umgekehrt, eine Vorrichtung (70) enthält, um ein Umschalten zwischen den beiden Katalysatorbehältern (54, 56) als Ansprechen auf das Verstreichen einer Zeitspanne nach dem Beginn der Einführung des Harzes in die Form (20) auslöst.

6. Ein Apparat nach Anspruch 4, dadurch gekennzeichnet dass die Vorrichtung (58) einen der Katalysatorbehälter (54, 56) mit der Hauptleitung verbindet, während sie die Verbindung des anderen der beiden Katalysatorbehälter (56, 54) von der Hauptleitung (28) unterbricht und umgekehrt, eine Vorrichtung (70) enthält, um das Umschalten zwischen den beiden Katalysatorbehältern als Ansprechen auf das Erfassen eines bestimmten Parameters, der mit der Einführung des Harzes zusammenhängt, auszulösen.

7. Ein Apparat nach Anspruch 6, dadurch gekennzeichent dass das Umschalten ausgelöst wird, wenn ein Aufnehmer (50) in der Form erfasst, dass die Harzfront eine vorbestimmte Stellung in der Form erreicht hat.

## Revendications

1. Procédé de moulage par transfert de résine destiné au moulage de produits à partir de résines thermodurcissables, par lequel un flux continu de résine jusque dans une cavité de moule (26) commence avec une résine mélangée à un premier catalyseur et passe, avant que le moule ne soit plein, à la même résine mélangée à un second catalyseur, le premier catalyseur étant choisi de façon à durcir la résine à une température plus élevée que le second catalyseur.

2. Procédé selon l'une quelconque des revendications précédentes, caractérisé en ce que les mélanges résine/catalyseur sont en nombre supérieur à deux, des mélanges successifs durcissant à une température plus basse que le mélange précédent.

3. Procédé selon la revendication 2, caractérisé en ce que le changement de mélanges résine/catalyseur est continu pendant tout le stade tandis que la résine s'écoule jusque dans le moule.

4. Dispositif destiné au moulage de produits à partir de résines thermodurcissables, le dispositif comprenant un réservoir (52) destiné à de la résine non catalysée, une conduite principale (28) s'étendant à partir du réservoir en vue du raccordement à un moule (20), un moyen (66) destiné à forcer de la résine à circuler à travers la conduite principale jusque dans le moule (20), au moins deux réservoirs de catalyseur indépendants (54, 56), caractérisé par un agitateur (68) destiné à mélanger les catalyseurs et la résine, en ce que les au moins deux réservoirs de catalyseur sont destinés à contenir des catalyseurs différents et sont associés à un unique réservoir de résine non catalysée, et en ce que des moyens (58) sont prévus afin de raccorder l'un ou l'autre des réservoirs de catalyseur à la conduite principale.

5. Dispositif selon la revendication 4, caractérisé en ce que le moyen (58) destiné à raccorder l'un des réservoirs de catalyseur (54, 56) à la conduite principale tout en déconnectant l'autre des réservoirs de catalyseur (56, 54) de la conduite principale (28), et vice versa, comprend un moyen (70) destiné à déclencher la permutation entre les deux réservoirs de catalyseur (54, 56) en réponse à l'écoulement d'un intervalle de temps après le commencement de l'introduction de résine dans un moule (20).

6. Dispositif selon la revendication 4, caractérisé en ce que le moyen (58) destiné à raccorder l'un des réservoirs de catalyseur (54, 56) à la conduite principale tout en déconnectant l'autre des réservoirs de catalyseur (56, 54) de la conduite principale (28), et vice versa, comprend un moyen (70) destiné à déclencher la permutation entre les deux réservoirs de catalyseur en réponse à la détection d'un paramètre particulier associé à l'introduction de résine.

7. Dispositif selon la revendication 6, caractérisé en ce que la permutation est déclenchée lorsqu'un capteur (50) dans le moule détecte que le front de résine a atteint une position prédéterminée à l'intérieur du moule.
